# EUROPEAN PATENT APPLICATION

(11) **EP 0 784 196 A2**
(43) Date of publication of application: **16.07.1997**
(21) Application number: 97300112.6
(22) Date of filing: 09.01.1997
(51) Int. Cl.: G01B 3/38, G01B 5/08

(54) **Improvements relating to measuring gauges**

(30) Priority: 10.01.1996 GB 9600510
(71) Applicant: Bowers Internal Gauge Co Ltd, Bradford, West Yorkshire BD3 8HU (GB)
(72) Inventor: Corner, Alan, Bradford, West Yorkshire BD3 8HU (GB)
(74) Representative: Denmark, James

(57) **Abstract**

The invention provides that large diameter components can have their diameters measured by a gauge which embodies drive elements (40-44) which engage the component to be measured when it has been moved into the correct proximity with the gauge. These drive elements (40-44) which may be a pair of eccentrically mounted rollers (44) at opposite sides of the gauge, engage the opposite sides of the component and pull the end of it towards and into engagement with stops (26,28,30) arranged equally on a pitch circle on the gauge. This has the effect of accurately positioning the component in relation to the gauge, following which measuring anvils (32,34,36) of the gauge are caused to engage the component where the diameter is to be measured. The gauge can be adapted to measure internal and external diameters, tapers and screw thread sizes.

## Description

This invention relates to measuring gauges of the type for measuring diameters of cylindrical components such as pipes, tubes, cylinders, screws and the like. The components in question will usually be but need not be of substantial weight such as not to be capable of being handled unaided by humans, but the invention is not to be considered as being limited to such components. The point is however that there are alternative gauges which can be used equally effectively for relatively lightweight components.

The invention was designed for measuring the external diameters of the said components, but it has been recognised that it can be used for measuring the internal diameter by appropriate rearrangement of the gauge parts.

Conventionally, the external diameter of a pipe is measured in one of two ways. In the first way, the measurement is taken between two points at diametrically opposite locations on the pipe surface. A suitable gauge for measuring in this way is called an indicating snap gauge which allows for variation in the diameter measured set within limits, but it is required to be used so as to detect the maximum diameter so as to avoid a chord measurement being taken. Its use therefore requires some significant skill on the part of the user.

The other way of measuring is to apply measuring anvils at three points disposed at 120 degrees relative to each other around the pipe circumference, ensuring automatically at least an effective mean diameter measurement at each measuring operation.

There are other methods for measuring external pipe diameters which use, for example, pneumatic gauges, and ring GO/ NO-GO gauges.

In the measuring of the diameters of large pipes and other components it is known to present an end of the component to the gauge whilst the gauge is "open", so that the gauge fits round or inside the gauge without interference, and after the component has been so positioned, the gauge anvils are moved into contact with the component so that the measurement can be taken. The component may be so presented under power, for example by a winch, whilst being carried on a bogie or the like. A known gauge of this type has end stop means against which the component abuts before the measurement is taken, and when the component so abuts the stop means, three anvils are caused to move relative to one another in a radial direction, either inwardly (for measuring external diameters) or outwardly (for measuring internal diameters) until they press against the component surface. This may be achieved by having two of the anvils fixed and by having one movable. This method is widely practised, but it does have a shortcoming in that if the end of the component presented to the gauge is not "squared" to the gauge, the measurement may be inaccurate due to the fact that the component will be at an angle which is other than the desired angle. This problem applies in particular to large and/or heavy components. If the gauge has two spaced sets of measuring anvils, and is used to measure not only the diameter but also the taper angle, the problem becomes even more acute, because not only will the measured diameter be wrong, but the taper angle measurement will also be inaccurate. Finally, if the end being measured also has an external thread of which the external or major thread diameter has to be measured and the anvils are formed accordingly, when the said end is not at the correct angle, an inaccurate measurement of the thread size will result.

The present invention seeks to provide a measuring gauge by the use of which the aforesaid problems will be obviated or mitigated.

According to the invention there is provided a measuring gauge for measuring diameters of components, wherein the gauge comprises end stop means against which the end of a component whose diameter is to be measured can be abutted, several radially disposed anvil means arranged to lie around or inside an external or internal surface of the component whose diameter is to be measured, and relatively movable to engage such surface to effect said measurement, characterised by drive means adapted to engage the component and to drive it against the end stop means to ensure that it is correctly squared with the gauge before the measurement is taken.

Preferably, the drive means also serves to hold the component against the stop means as the measurement is taking place.

Preferably, the drive means comprises at least one eccentrically mounted drive roller, power means and a drive arm connected between the power means and the roller to cause the roller to swing into engagement with the component and to pull same towards the stop means when the drive arm is driven by the power means

The roller may have a tyre of rubber or the like to provide a good friction grip on the roller and provide a material which will compress, if need be, when the component is pressed against the anvil means for the measurement to be taken.

There preferably are at least two of said rollers, and they are preferably equally spaced in an angular direction around a centre line of the gauge.

There preferably are three anvils making up said anvil means, two of same being fixed, and the third being movable, in conventional fashion, under power, for example by a pneumatic or hydraulic cylinder, or by means of an electric solenoid. To this end, the power cylinder or solenoid may be arranged to drive an anvil push rod in a direction at right angles to the said axis, said push rod having a chamfered end which provides a drive wedge for the movable anvil to push it inwardly. The pushing may be effected by the intermediary of an anvil roller

The gauge will of course have or be connected to a display device, so that the measured diameter can be indicated. Such display device may be any suitable and/or conventional arrangement, and may be mechanical, electronic, optical and/or acoustic in nature, or any combination of these systems.

Although the invention may have main application for the measurement of the external diameters of components, it will readily be understood that it can easily be adapted for use to measure internal diameters, in which case the anvil means will enter the inside of the component bore to be measured and the anvil means will move outwardly to effect the measurement after the drive means has pulled the component against the stop means, and it can be adapted to measure root and crest diameters of threaded cylinders, in which case the respective anvils may have to be axially offset and may be adapted to engage the thread roots or crests at diametrically opposite locations. The gauge can be adapted to measure internal and external threads.

The gauge may also include a detector device to detect when the component is in a particular position in relation to the gauge, so that the drive means can be operated. Where, as is preferred, there are three end stops forming the end stop means, one of the end stops may also form the detector device, and as soon as the component abuts that end stop, the drive means is operated. The said detector device is preferably located at a position such that it is expected that that device will be contacted by the component first as it comes into operational engagement with the gauge.

An embodiment of the invention will now be described by way of example with reference to the accompanying drawings, wherein;-
Fig. 1 is an end view of a gauge according to the invention;
Fig. 2 is a side view of the gauge shown in Fig. 1;
Fig. 3 is a sectional end view of the gauge of Fig. 1, the section being taken on line A-A of Fig. 2;
Fig. 4 is a sectional side view of the gauge of Fig. 1, the section being taken on line B-B in Fig. 3;
Fig. 5 is an enlarged sectional end view of the detail ringed in Fig. 3;
Fig. 6 is an enlarged sectional side view of the detail ringed in Fig. 4; and
Fig. 7 shows how the gauge can be adapted for measuring screw diameters

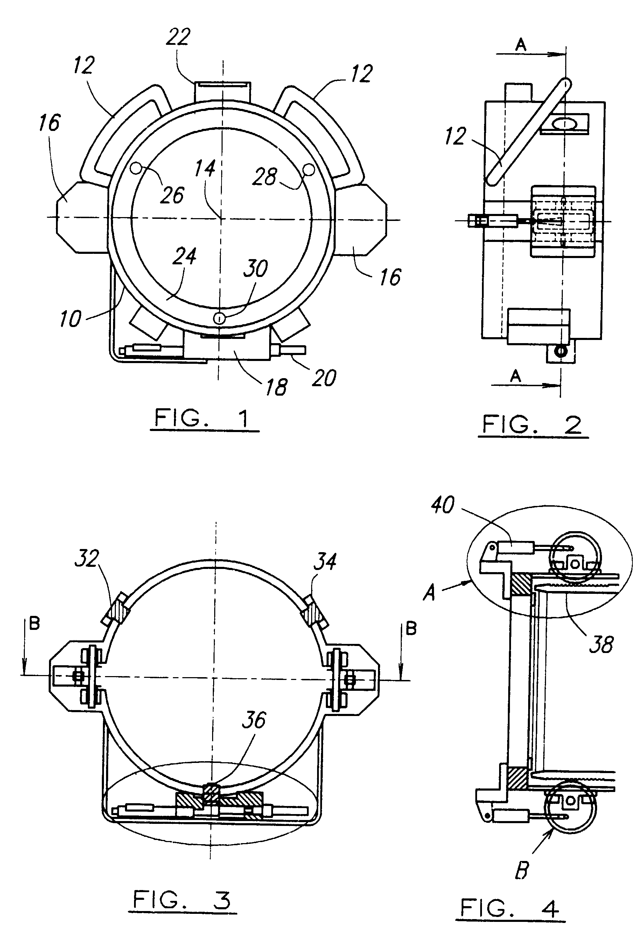

Referring to the drawings, in Fig. 1, the gauge will be seen to comprise a length of outer tube 10 of steel or the like, to which are secured two lifting brackets 12 symmetrically arranged in relation to the tube axis 14, but whilst this arrangement is preferred, it is not essential. Also arranged symmetrically in relation to the said axis 14 are two housings 16 which, as will be explained hereinafter, contain the drive means for driving the component to be measured into the squared position. In the Fig. 1 position, which is the normal use position, at the lower side of the tube is a mounting block 18 for the displacement device 20 for the movable anvil (to be described hereinafter) and at the top of the tube 10 is a digital read out display 22, on which the measurement of the diameter of the component is displayed.

Using the lifting brackets 12 the gauge may be presented to the component (or test piece) to be measured as an alternative to the more usual method of the component being presented to the gauge, but the presentation of the component to the gauge is not to be considered excluded from the present invention.

At one end of the tube 10 there is a stop ring 24 which carries three equi-anglarly spaced stop anvils 26, 28 and 30, which form the stop means of the gauge, and the stop anvil 30 is positioned at bottom dead centre, whilst the other two 26, 28 are symmetrically arranged at the ten and two o'clock positions.

As best seen in Fig. 3, the tube carries three radial measuring anvils 32, 34 and 36 arranged similarly to the anvils 26, 28 and 30, but the anvils 32, 34 and 36 are carried by the tube 10 to extend radially inwardly therefrom. The anvils 32, 34 are fixed in position and are therefore fixed anvils, whilst anvil 36 is a movable anvil and can be displaced radially by means of the displacement device 20.

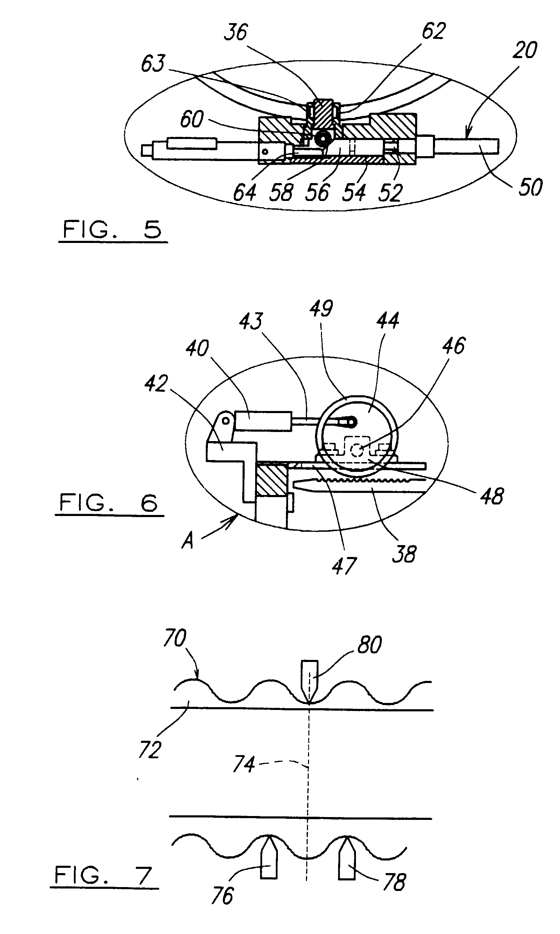

As explained hereinbefore in reciting the invention and its preferred features, the gauge operates in that the component to be measured, indicated as a pipe 38 in Figs. 4 and 6, is introduced into the tube 10, until the pipe end lies inside the ring of radial anvils 32, 34 and 36, and until the pipe end abuts one of stop anvils 30, which is sensed by a means (not shown) and this causes the drive means in housings 16 to be operated, which in turn causes the pipe, in this embodiment, to be pulled further into the tube 10 until the component end abuts all of the stop anvils 26, 28 and 30 and the pipe becomes "squared" into best position for making the diameter measurement via the displacement device 20 and the read-out display 22. The tube 10 is held this way until the measurement is made.

The drive means in each housing 16 will now be described with reference to Figs 4 and 6. Each drive means comprises a power cylinder 40 which is pivotally mounted on a bracket 42 carried by the tube 10. It might be noted at this time that an open frame which supports the essential components could be used in place of the tube 10. The cylinder may be pneumatically or electrically operated, and it extends axially of the tube 10 as shown. Its piston 43 is connected pivotally and eccentrically to a cam wheel or roller 44 which in turn is mounted for rotation about an axis 46 by means of block bearings 48. The axis 46 is offset in relation to the centre of the wheel 44, and the wheel 44 finally has an outer tyre 49 of rubber or the like resilient and good friction gripping material. The wheel lies in a plane which is radial with respect to the tube 10, and the tube 10 is axially slotted at 47 in register with the wheel 44 so that it can extend into the tube 10 as will be explained.

The operation of each drive means is quite simple in that the drive means has an actuator "off" position as shown at "A" in Figs. 4 and 6, and an actuator "on" position as shown at "B" in Fig. 4. As the drive means moves from the off position A, to the on position B, the cylinder 40 is extended, and the wheel 44 is rotated by the piston 42 about the eccentric axis 46 and the wheel is displaced into the tube interior, turning as it proceeds, so that it frictionally engages and drives the pipe 38 forward onto the stop anvils 26, 28 and 30, as described above, and the measurement can now be made. The wheels 44 move simultaneously to provide effective feeding of the pipe 38. The cylinders 40 can be caused to be retracted after the measurement has been made.

In the making of the measurement, as best explained in relation to Figs. 3 and 5, the anvil 36 is caused to move radially inwards, which has the effect of pushing the pipe against the two fixed anvils 32 and 34, and during this displacement the rubber of the tyres 49 is compressed, or deformed enabling the tube 10 to be firmly pressed against the measuring anvils 32, 34 and 36 and to allow the component to be correctly aligned within the gauge against the test anvils. The displacement device 20 for displacing the anvil 36 is conventional and comprises a displacement cylinder 50 whose piston 52 moves in a bore 54 in the block and displaces a push bar 56 of which one end is chamfered as at 58. The chamfered end 58 is engaged by a displacement roller 60 carried at one end of the radial anvil 36. Anvil 36 slides in a sleeve 62 which also contains a compression spring 63 urging the anvil 36 to an outwardly displaced position so that when the force supplied by the bar 56 is removed, the anvil will return automatically to the outwardly displaced position and the pressing of the tube 10 against the anvils 32, 34 and 36 will cease. The sleeve 62 seals to the anvil 36 to prevent ingress of foreign bodies into the sleeve 62, which could impair performance.

The push bar 56 also abuts directly on a transducer rod 64 which in turn is electrically connected to the display device 22, so that as the cylinder 50 is extended when measuring has to take place, the bar 56 is pushed to the right in Fig. 5, and this has the effect of pushing the transducer rod 64 to the right in proportion to the displacing of the movable anvil 36 inwardly. The transducer bar 64 and the display device 22 indicate the displacement which is converted by the transducer of the gauge into a measurement of the external diameter of the tube 10.

Fig. 7 shows how the gauge can be used in the measurement of thread sizes. Fig. 7 shows for example a thread 70 on a pipe 72. The thread is as is well known, in the form of a helix so that the opposite ends of a true diagonal 74 do not fall on the same profile of the thread. Consequently, to measure the thread diameter correctly, either the thread root diameter or the crest diameter must be measured and there need to be anvils spaced in an angular fashion around the component which engage the part of the thread to be measured. In the arrangement shown, there are two anvils 76,78 at one side of the thread and one 80 at the other side of the thread 70, the anvils 76, 78 lying axially and equally to opposite sides of the transverse plane 74 on which the anvil 80 lies. With two such anvils 76,78 on one side, a mean root diameter may be measured or a tapered thread may be detected and measured. The measurements can also be effected where there is only one anvil opposite but offset in relation to the anvil 80. In a similar manner, the crest diameter of the thread 70 can be measured. The advantage of the invention that the component is correctly presented, e.g. orthogonal, to the end of the pipe and is clamped against reference stops as described above, also applies in relation to the measuring of thread diameters.

The embodiment of the invention described is only one form of the invention. The concept can be applied to the measurement of internal diameters, and other forms of drive means can be adopted. The transducer which is used for the translation of the movement of the measuring anvil can be any suitable and may be mechanical, electronic, optical and/or acoustic in nature.

For example, the component being measured may be a solid cylinder and the required measurement being the outside diameter. Additionally, the invention does not require that the end of the tube be squared off. Even if the end has a stepped formation, the stops can be set at different axial positions to take account of this stepped arrangement.

## Claims

1. A measuring gauge for measuring diameters of components, wherein the gauge comprises end stop means (26,28,30) against which the end of a component (38) whose diameter is to be measured can be abutted, several radially disposed anvil means (32,34,36) arranged to lie around or inside an external or internal surface of the component whose diameter is to be measured, and relatively movable to engage such surface to effect said measurement, characterised by drive means (40-44) adapted to engage the component and to drive it against the end stop means (26,28,30) to ensure that it is correctly squared with the gauge before the measurement is taken.

2. A gauge according to claim 1, wherein the drive means (40-44) also serves to hold the component against the stop means (26,28,30) as the measurement is taking place.

3. A gauge according to claim 1 or 2, wherein the drive means (40-44) comprises at least one eccentrically mounted drive roller(44), power means (40) and a drive arm (43) connected between the power means (40) and the roller (43) to cause the roller (44) to swing into engagement with the component and to pull same towards the stop means (26,28,30) when the drive arm (43) is driven by the power means (40).

4. A gauge according to claim 3, wherein the roller (40) has a tyre (49) of rubber or the like to provide a good friction grip on the component and provide a material which will compress or otherwise deform, if need be, when the component is pressed against the anvil means (32,34,36) for the measurement to be taken.

5. A gauge according to claim 3 or 4, wherein there are at least two of said rollers (44), and they are equally spaced in an angular direction around a centre line of the gauge.

6. A gauge according to any one of the preceding claims, wherein there are three anvils (32,34,36) making up said anvil means, two (32,34) of same being fixed, and the third (36) being movable, in conventional fashion, under power, for example by a pneumatic or hydraulic cylinder, or by means of an electric solenoid.

7. A gauge according to claim 6, wherein the moveable anvil (36) is arranged to be driven in a direction at right angles to the said axis.

8. A gauge according to claim 7, wherein the moveable anvil (36) is adapted to be driven by a push rod (56) having a chamfered end (58) which provides a drive wedge for the movable anvil (36) to push it inwardly.

9. A gauge according to claim 8 wherein the push rod (56) effects the pushing by the intermediary of an anvil roller (60).

10. A gauge according to any preceding claim, including a display device (22), so that the measured diameter can be indicated, such display device being any suitable and/or conventional arrangement, such as mechanical, electronic, optical and/or acoustic, or any combination of these systems.

11. A gauge according to any one of the preceding claims, including a detector device to detect when the component is in a particular position in relation to the gauge, after which the drive means (40-44) is operated.

12. A gauge according to claim wherein the end stops means (26,28,30) embodies the detector device.

13. A gauge according to claim 12, wherein there are three end stops (26.28,30) forming the end stop means, and one of the end stops embodies the detector device.

14. A gauge according to claim 13, wherein the said stop embodying the detector device is preferably located at a position such that it is expected that that stop will be contacted by the component before it contacts the other stops as the component comes into operational engagement with the gauge.
